Europäisches Patentamt

European Patent Office

Office européen des brevets

(19)

(11) Veröffentlichungsnummer: **0 230 861**
**A2**

(12) **EUROPÄISCHE PATENTANMELDUNG**

(21) Anmeldenummer: **86810606.3**

(22) Anmeldetag: **19.12.86**

(51) Int. Cl.⁴: **A23G 1/22**

(30) Priorität: **20.12.85 CH 5453/85**

(43) Veröffentlichungstag der Anmeldung:
**05.08.87 Patentblatt 87/32**

(84) Benannte Vertragsstaaten:
**AT BE CH DE FR GB IT LI LU NL SE**

(71) Anmelder: **Max Riner AG**
**Jurastrasse 25**
**CH-5102 Rupperswil(CH)**

(72) Erfinder: **Lässer, Hanspeter**
**Stockhardweg 2**
**CH-5102 Rupperswil(CH)**

(74) Vertreter: **Gasser, François W.**
**Hirschengraben 10 Postfach 1555**
**CH-3001 Bern(CH)**

(54) **Schokoladenform.**

(57) Um die Vorteile der ganz aus Stahl gefertigten Schokoladeformen mit jenen von Kunststoffformen zu kombinieren, wird ein aus Kunststoff gefertigter Formenträger (1) zusammen mit aus Stahlblech geformten Giessform-Segmenten verbunden. Um bei minimalem Gewicht die geforderte Stabilität und Steifheit aufzuweisen, werden die zwei Längsränder (2, 3) des Formenträgers (1) mittels Längsrippen (5), Querripenn (6) und schrägen Rippen (7) miteinander verbunden. In den Längsrändern (2, 3) sind Nuten - (14, 15) vorgesehen, in die speziell geformte Ränder der Giessform-Segmente hineinpassen, derart, dass mehrere solcher Giessform-Segmente hintereinander in einen Formenträger (1) eingeschoben werden können. Um den Formenträger (1) kurzseitig abzuschliessen und einen ringsum geschlossenen Rahmen zu bilden, werden Verschlussstücke mit Schnellverschlüssen auf den Formenträger (1) aufgestckt. Die Erfindung bietet unter anderem den Vorteil, dass die Stahlgiessform-Segmente jederzeit leicht aus dem Kunststoffformenträger (1) entnommen und durch neue ersetzt werden können. Zudem ist der Erfindungsgegenstand bei der Schokoladentafelproduktion leiser als Stahlformen und benötigt weniger Energie, um manipuliert zu werden.

Fig.1

## SCHOKOLADENFORM

Die vorliegende Erfindung betrifft eine Schokoladenform gemäss dem Oberbegriff des Patentanspruchs 1.

In der Schokoladenherstellung werden seit Jahren Stahlträger mit darin integrierten Stahl-Giessformen verwendet, um darin z.B. Schokoladetafeln zu giessen. Derartige Träger und Formen sind ausserordentlich verschleissfest und bewähren sich nicht zuletzt auch bei der Herstellung von Nussschokoladen. Durch ihre schnelle Reaktionszeit auf Temperaturunterschiede bieten sie weitere Vorteile, die bei der Herstellung von Tafeln von Qualitätsschokolade nicht ausser Acht gelassen werden dürfen.

Allerdings bieten derartige Formen auch gewichtige Nachteile, sind doch Stahlformen, resp. ihre ebenfalls aus Stahl gefertigten Träger, in der Produktion recht laut und benötigen aufgrund ihres hohen Gewichtes eine beachtliche Energie, um auf den Produktionsstrassen bewegt zu werden. Zudem sind Stahlformen mit ihren zugehörigen Stahlträgern sehr teuer.

Der vorliegenden Erfindung liegt die Aufgabe zugrunde, eine Schokoladenform mit darin integrierten Giessformen zu schaffen, die die Vorteile der Stahlformen mit jenen der Kunststoffformen kombiniert, ohne dass Nachteile eingehandelt werden müssen. Die erfindungsgemässe Form mit Formenträger und Giessformen soll wesentlich leichter, leiser und billiger sein, als die herkömmlichen Elemente dieser Art, ohne die Qualitätsvorteile der Stahlformen einzubüssen.

Erfindungsgemäss wird diese Aufgabe durch eine Schokoladenform gelöst, wie sie im Patentanspruch 1 definiert ist. Vorteilhafte Ausgestaltungen des Erfindungsgegenstandes sind in den abhängigen Ansprüchen definiert.

Im Folgenden wird eine vorteilhafte Ausführungsform des Erfindungsgegenstandes anhand der Zeichnung beschieben. In dieser zeigt

Fig. 1 einen Teil eines Formenträgers ohne längsseitiges Verschlussstück in Draufsicht,

Fig. 2 den Formenträger von Fig. 1 im Längsschnitt entlang der Linie II-II,

Fig. 3 denselben Formenträger in Frontansicht,

Fig. 4 ein schmalseitiges Verschlussstück zu diesem Formenträger in Frontansicht,

Fig. 5 das Verschlussstück nach Fig. 4 im Schnitt entlang der Linie V-V,

Fig. 6 ein für den Einbau in den Formenträger nach Fig. 1 vorgesehenes Giessform-Segment in Draufsicht, wobei die Struktur, die es an seinem Boden aufweist, um die Schokoladentafeloberseite zu formen, weggelassen ist,

Fig. 7 das Giessform-Segment nach Fig. 6 in Seitenansicht,

Fig. 8 dasselbe Giessform-Segment in Frontansicht,

Fig. 9 den Teil des Formenträgers nach Fig. 1 mit darin eingebauten Giessform-Segmenten nach Fig. 6, schmalseitig verschlossen mit einem Verschlussstück gemäss Fig. 4, in Draufsicht.

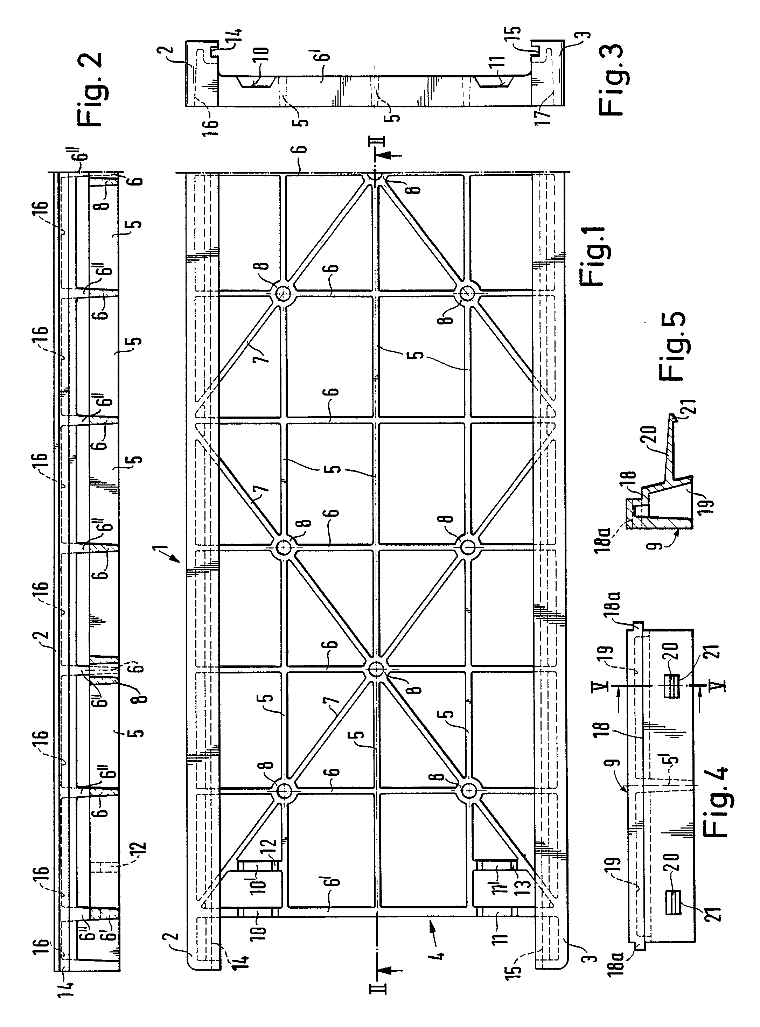

In Fig. 1 erkennt man einen generell mit 1 bezeichneten Formenträger, der aus Kunststoff, vorteilhafterweise aus Makrolon (Polykarbonat) gespritzt ist und der im wesentlichen aus zwei Längsrändern 2, 3 und einer diese verbindenden Rippen-Fachwerkkonstruktion 4 besteht. Letztere weist, um die geforderte Stabilität und Steifheit des Formenträgers 1 garantieren zu können, vorteilhafterweise Längsrippen 5, Querrippen 6 und schräge Rippen 7 auf, die alle in Verbindungsaugen 8 zusammenlaufen, resp. sich in solchen kreuzen. Kurzseitig werden die Längsränder 2, 3 durch Verschlussstücke 9, wie eines davon in den Fig 4 und 5 dargestellt ist, miteinander verbunden, wodurch ein ringsum geschlossener Rahmen entsteht. Um die Verschlussstücke 9 mit den Längsseiten 2, 3 und der Rippen-Fachwerkkonstruktion 4 verbinden zu können, weisen die endständigen Querrippen 6' vorteilhafterweise Vertiefungen 10 und 11 auf und in deren Nähe sind Zusatzrippen 12, 13 mit Vertiefungen 10'und 11' angeordnet, deren Funktion später erläutert werden wird.

Aus den Fig. 2 und 3 erkennt man, dass die Längsränder 2, 3 vorteilhafterweise höher sind als die diversen Rippen 5, 6 und 7 und je mit einer Nut 14 resp. 15 versehen sind. Um Gewicht einzusparen, sind die Längsränder 2, 3 vorteilhafterweise nicht voll ausgegossen, sondern weisen zwischen Verstärkungsrippen 6", die Fortsetzungen der Querrippen 6 sind, Ausnehmungen 16, 17 auf, wie mit gestrichelten Linien angedeutet ist.

Wie aus den Fig. 4 und 5 ersichtlich ist, bilden die Verschlussstücke 9 im wesentlichen nur die schmalseitigen Fortsetzungen der den Rahmen mitbildenden Längsränder 2, 3. Im Gegensatz zu diesen weisen sie vorteilhafterweise keine Nuten auf, sondern einfach Auflagen 18 und seitliche Profile 18a, die zwecks Positionnierung der Verschlussstücke 9 in die Nuten 14, 15 der Längsränder 2, 3 eingeschoben werden. Wie die Längsränder 2, 3 sind sie vorteilhafterweise mit Ausnehmungen 19 und zumindest einer Verstärkungsrippe 5' versehen, um Gewicht zu sparen. Um mit dem Formenträger 1 verbunden werden zu können, tragen die Verschlussstücke 9 vorteilhafterweise je zwei Zungen 20, die über die Vertiefungen 10, 11 der endständigen Querrippen 6'und die Vertiefungen 10', 11' der Zusatzrippen 12, 13 geschoben werden, hinter welchen sie sich mit ihren Widerhaken 21 festhaken. Sollen die Verschlussstücke 9 vom Formenträger 1 getrennt werden, genügt es, in bekannter Weise die Zungen 20 von unten leicht anzuheben, bevor die Verschlussstücke 9 frei zwischen den Enden der Längsränder 2, 3 herausgezogen werden können.

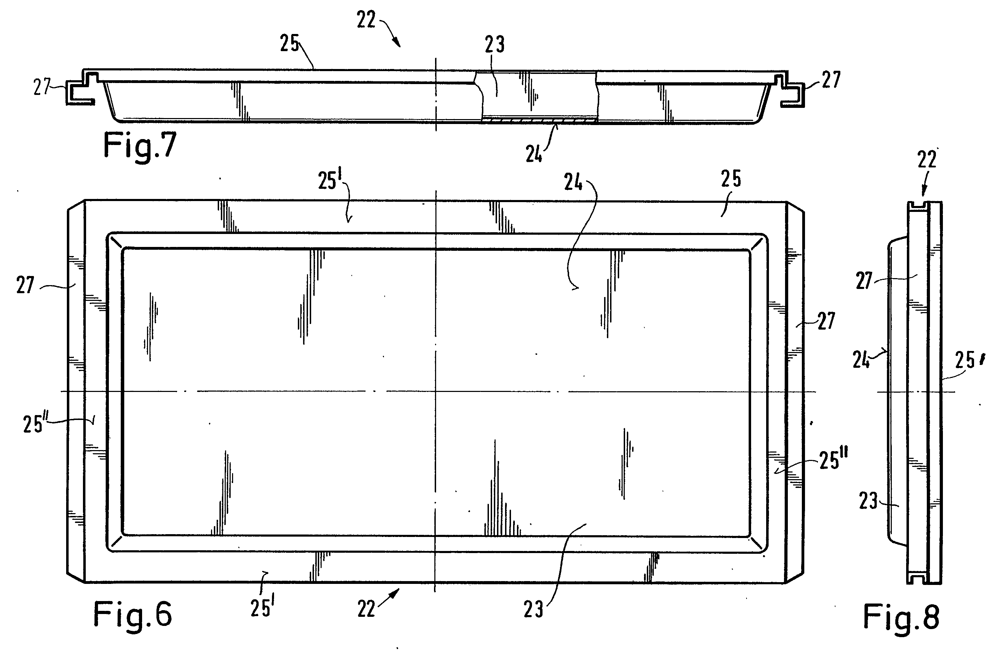

In den Fig. 6, 7 und 8 ist ein Giessform-Segment 22 in Drauf-, Seiten-resp. Frontansicht dargestellt. Vorteilhafterweise sind diese Teile aus tiefgezogenem rostfreiem Stahlblech gefertigt und weist eine Schale 23 auf, deren Boden 24, entgegen der Darstellung in der Zeichnung, vorteilhafterweise strukturiert ist, um der in ihr geformten Schokoladetafel die bekannte Form zu geben. Rund um die Schale 23 herum zieht sich ein erhöhter Rand 25, der auf den Längsseiten 25' vorteilhafterweise derart umgebogen ist, dass die einzelnen Giessform-Segmente 22 möglichst nahtlos aneinandergeschoben werden können, wogegen er auf den Schmalseiten 25" Zungen 27 bildet, die in die Nuten 14, 15 der Längsränder 2, 3 des Formenträgers 1 eingeschoben werden können. Es ist angezeigt, pro zu giessende Schokoladentafel ein Giessform-Segment 22 vorzusehen.

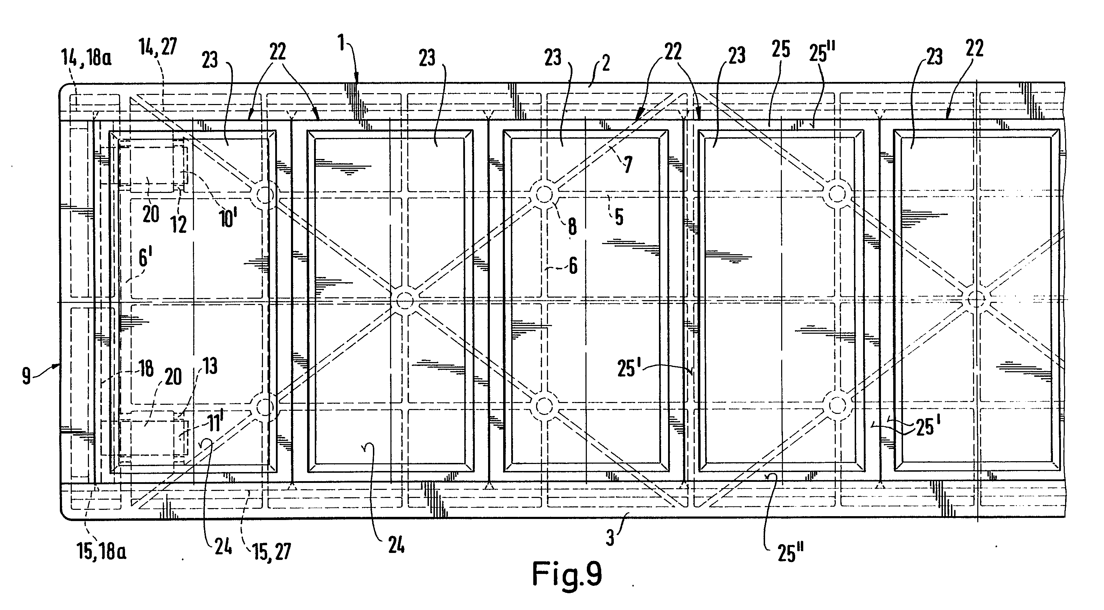

Um aus den vorbeschriebenen Einzelteilen, das heisst, dem Formenträger 1, den Verschlussstücken 9 und den Giessform-Segmenten 22 eine für die Schokoladentafel-Produktion verwendbare Schokoladeform zu erhalten, genügt es, diese Teile gemäss Fig. 9 zusammenzufügen. Dies geschieht dadurch, dass eine Mehrzahl von Giessform-Segmenten 9, z.B. deren neun, derart zwischen die Längsränder 2, 3 des Formenträgers 1 eingeschoben werden, dass die Zungen 27 der Giessform-Segmente 22 in die Nuten 14, 15 der beiden Längsränder 2, 3 zu liegen kommen. Der mit Giessform-Segmenten 22 gefüllte Formenträger 1 wird dann mittels zwei schmalseitigen Verschlussstücken 9 zu einem kompackten Rahmen verschlossen. Vorteilhafterweise ist bei der Dimensionierung der einzelnen Teile der Tatsache Rechnung getragen worden, dass die aus Stahlblech gefertigten Giessform-Segmente 22 einen anderen Temperaturkoeffizienten aufweisen, als der aus Kunststoff bestehende Formenträger 1, derart dass vorbestimmte Dilatationsfugen im kalten Zustand der Einzelteile vorhanden sind.

Die derart zusammengestellte Schokoladenform bietet gegenüber allen Formen herkömmlicher Verarbeitungsart grosse Vorteile, da die mit der Schokoladenmasse in Kontakt kommenden Giessform-Segmente 22 aus Stahl gefertigt sind, wogegen der Rahmen aus einem hochfesten aber wesentlich leichteren Kunststoff besteht. Dadurch ist der Erfindungsgegen-stand leichter als die herkömmlichen ganz aus Stahl gefertigten Formen und kombiniert die Vorteile der beiden Materialien. Zudem gestattet die beschriebene Ausführungsvariante der Erfindung, eventuell kaputtgegangene einzelne Giessform-Segmente ohne grossen Aufwand und mit minimalen Kosten auszuwechseln, denn es genügt, ein seitliches Verschlussstück 9 zu entfernen und die Giessform-Segmente 22 aus den Nuten 14, 15 der Längsränder 2, 3 herauszuschieben, bevor die Form mit einem oder mehreren neuen Giessform-Segmenten 22 in umgekehrter Reihenfolge wieder zusammengestellt wird. Dank der einfachen Manipulierbarkeit der erfindungsgemässen Form können die Giessform-Segmente 22 bei Bedarf auch leicht zwecks Reinigung entfernt werden.

Durch die Verwendung von Kunststoff für den Formenträger 1, ist dieser sehr leicht, verursacht beim Gebrauch wenig Lärm und benötigt für seine Verschiebung auf dem Produktionsband wenig Energie.

Es ist selbstverständlich, dass insbesondere die Verschlussstücke 9 mit ihren Zungen 20 anders ausgestaltet werden können. So lässt sich beispielsweise eine Schraubverbindung vorstellen, die mit wenig mehr Aufwand ebenfalls ein leichtes Demontieren der Form ermöglicht. Auch kann der Formenträger 1 mit seinen Rippen 4, 5 und 6 anders geformt werden, ohne dass dadurch Nachteile entstehen müssen. Dasselbe gilt für die Ausgestaltung der Längsränder 2, 3 des Formenträgers 1 als auch für die Ränder 25, 25' und 25" der Giessform-Segmente 22, wobei dabei lediglich darauf geachtet werden muss, dass letztere sicher mit dem Formenträger 1 verbunden werden können, um Pannen während der Schokoladentafelproduktion zu vermeiden.

Je nach Bedarf können die Giessform-Segmente 22 aus anderem Material als aus Stahlblech gefertigt werden, genauso wie der Formenträger 1 aus anderem Kunststoff als aus Makrolon (Polykarbonat) hergestellt werden kann.

## Ansprüche

1. Schokoladenform bestehend aus Formenträger (1) mit Rahmen und Giessformen, dadurch gekennzeichnet, dass der Formenträger (1) aus Kunststoff besteht und zumindest zwei Längsränder (2, 3) aufweist, die mittels Rippen (4) und schmalseitigen, abnehmbaren Verschlussstücken (9) miteinander verbunden sind und die Giessform-Segmente (22) aus Stahl gefertigt sind und entnehmbar mit dem Formenträger (1) verbunden sind.

2. Schokoladenform gemäss Anspruch 1, dadurch gekennzeichnet, dass die Längsränder (2, 3) mittels Längsrippen (5), Querrippen (6) und -

schrägen Rippen (7) miteinander verbunden sind, wobei sich alle drei Rippenarten in Verbindungsaugen (8) kreuzen.

3. Schokoladenform gemäss Anspruch 1, dadurch gekennzeichnet, dass die Verschlussstücke (9) mittels Schnappverschlüssen, bestehend aus Zungen (20) und Widerhaken (21) auf Seite der Verschlussstücke (9) und endständigen Rippen (6') und Zusatzrippen (12, 13) auf Seite des Formenträgers (1), mit letzterem verbindbar sind.

4. Schokoladenform gemäss Anspruch 1, dadurch gekennzeichnet, dass die Längsränder (2, 3) des Formenträgers (1) Nuten (14, 15) aufweisen, in die die Giessform-Segmente (9) einschiebbar sind.

5. Schokoladenform gemäss Anspruch 1, dadurch gekennzeichnet, dass die Giessform-Segmente (22) hochgezogene Ränder (25) aufweisen, die schmalseitig zu Zungen (27) gebogen sind, die in die Nuten (14, 15) der Längsränder des Formenträgers (1) einschiebbar sind.

6. Schokoladenform gemäss Anspruch 1, dadurch gekennzeichnet, dass der Formenträger - (1), die Verschlussstücke (9) und die Giessform-Segmente (22) derart dimensioniert sind, dass in ihrem Kalten Zustand zwischen dem aus Formenträger (1) und Verschlussstücken (9) gebildeten Rahmen und den Giessform-Segmenten (22) Dilatationsfugen vorhanden sind.

Fig. 2

Fig. 3

Fig.1

Fig.5

Fig.4

Fig.7

Fig.6

Fig.8

0 230 861

Fig.9